# EUROPÄISCHE PATENTANMELDUNG

(11) **EP 2 743 582 A1**
(43) Veröffentlichungstag der Anmeldung: **18.06.2014**
(21) Anmeldenummer: 12197202.0
(22) Anmeldetag: 14.12.2012
(51) Int. Cl.: F23D 14/22, F23D 14/76, F23D 14/78

(54) **Brennerspitze und Brenner**

(71) Anmelder: Siemens Aktiengesellschaft, 80333 München (DE)
(72) Erfinder: Kiener, Christoph, 81369 München (DE)

(57) **Zusammenfassung**

Es wird eine Brennerspitze (1) mit einer Brenneraustrittsöffnung (3) und wenigstens einem die Brenneraustrittsöffnung (3) umgebenden Brennerspitzenteil (11), welches eine Brennerspitzenwand (11A) mit einer ein geschlossenes Ende des Brennerspitzenteils (11) bildenden Stirnwand (47, 67, 147) aufweist, zur Verfügung gestellt. Das Brennerspitzenteil (11) weist in seinem Inneren einen bis zur Stirnwand (47) reichenden Hohlraum auf, wobei die Brennerspitzenwand (11A) eine zum Hohlraum weisende Wandinnenseite besitzt. In dem Hohlraum ist ein Verdrängungskörper (5) mit einer der Wandinnenseite der Brennerspitzenwand (11A) zugewandten Verdrängungskörper-Außenseite angeordnet. Zwischen der Wandinnenseite der Brennerspitzenwand (11A) und der Verdrängungskörper-Außenseite wenigstens ein Strömungskanal (10) gebildet ist.

## Beschreibung

Die vorliegende Erfindung betrifft eine Brennerspitze, insbesondere eine Brennerspitze für Hochtemperaturanwendungen in der Synthesegaserzeugung. Daneben betrifft die Erfindung einen Brenner, insbesondere einen Brenner für die Synthesegaserzeugung.

Ein Brenner für einen Synthesegasreaktor ist schematisch in DE 10 2008 006 572 A1 beschrieben. Dieser umfasst ein äußeres Brennerelement, in dessen Spitze ein Hohlraum mit einem darin angeordneten Verdrängerkörper vorhanden ist. Um den Verdrängungskörper herum ist ein Kühlwasserkanal geführt, der zum Kühlen der Brennerspitze dient. Der Brenner umfasst weiterhin ein inneres Brennerelement, das konzentrisch zum äußeren Rohr angeordnet ist. Zwischen dem inneren Brennerelement und dem äußeren Brennerelement ist ein Kanal für die Zufuhr von Brennstaub, beispielsweise Kohlestaub, gebildet. Auch das innere Brennerelement weist im Bereich seiner Spitze einen Hohlraum mit einem darin angeordneten Verdrängerkörper, um den herum ein Kühlwasserkanal geführt ist, mit dem die Spitze des inneren Brennerelements gekühlt wird, auf. Zentrisch zum inneren Brennerelement ist ein Pilotbrenner angeordnet, wobei zwischen dem inneren Brennerelement und dem Pilotbrenner ein Zufuhrkanal für ein Sauerstoff/Dampf-Gemisch gebildet ist. Wie das äußere und das innere Brennerelement ist der Pilotbrenner hohlwandig ausgebildet, wobei im Bereich der Spitze des Pilotbrenners ein Verdrängerkörper angeordnet ist, um den herum ein Kühlwasserkanal geführt ist, um die Pilotbrennerspitze kühlen zu können.

Die Brennerspitzen von Brennern in Synthesegasreaktoren sind bei Betrieb des Reaktors hohen Temperaturen ausgesetzt, so dass ein erheblicher Wärmeeintrag in die Brennerspitze erfolgt. Die eingetragene Wärme wird durch das in den beschriebenen Kühlwasserkanälen fließende Kühlwasser abgeführt. Um den Wärmeeintrag zu verringern, kann die Brennerspitze außerdem mit einer Wärmedämmschicht versehen sein, wie dies in DE 10 2008 006 572 A1 beschrieben ist.

Die jeweiligen Brennerelemente werden in der Regel aus mehreren Rohren und einer die Rohre miteinander verbindenden Spitze, in der auch der Verdrängungskörper angeordnet ist, aufgebaut. Die Spitze wird dabei in der Regel aus einem äußeren ringförmigen Teil und einem inneren ringförmigen Teil zusammengebaut, wobei das äußere ringförmige Teil mit dem äußeren Rohr und das innere ringförmige Teil mit dem inneren Rohr verbunden wird. Zudem werden die ringförmigen Teile an ihren dem äußeren Rohr bzw. dem inneren Rohr abgewandten Enden miteinander verschweißt. Der Verdrängungskörper wird mit einem zentral angeordneten Rohr verbunden, welches den Zwischenraum zwischen den äußeren Rohr und dem inneren Rohr in einen ringförmigen Zufuhrkanal für Kühlwasser und einen ringförmigen Abfuhrkanal für Kühlwasser unterteilt. Jedes Brennerelement weist daher einen komplexen Aufbau auf. Außerdem sind die Brennerspitzen relativ groß, und damit schwer, was ihre Handhabbarkeit bspw. im Rahmen einer Wartung verringert.

Aus fertigungstechnischen Gründen betragen die Wandstärken der Rohre bzw. der Spitzenteile typischerweise mindestens 3 mm, was die Wärmeabfuhr erschwert und die Anfälligkeit gegenüber Temperaturfluktuationen erhöht. Außerdem können Schwebeteilchen und Kühlwasser mit der Zeit zu einer Verengung der Kühlwasserkanäle im Bereich der Brennerspitze oder gar zu einem Blockieren der Kühlwasserkanäle führen, was einen erhöhten Wartungsbedarf mit sich bringt, damit derartige Verengungen rechtzeitig entdeckt werden können.

Zudem sind die Materialien, aus denen die Brennerspitzen hergestellt sind, teuer und in der Verarbeitung aufwendig, da die Teile, aus denen die Brennerspitzen bestehen, miteinander verschweißt werden müssen. Das Verschweißen der Teile zum Formen der jeweiligen Brennerspitze ist nicht einfach, da die typischerweise verwendeten Superlegierungen auf Nickelbasis spezielle Schweißprozeduren erfordern.

Gegenüber dem beschriebenen Stand der Technik ist es Aufgabe der vorliegenden Erfindung, eine vorteilhafte Brennerspitze, insbesondere für Brennerelemente eines Synthesegasbrenners, zur Verfügung zu stellen. Daneben ist es eine Aufgabe der vorliegenden Erfindung, einen vorteilhaften Brenner, insbesondere für die Synthesegaserzeugung, zur Verfügung zu stellen.

Die genannte Aufgabe wird durch eine Brennerspitze nach Anspruch 1 bzw. einen Brenner nach Anspruch 18 gelöst. Die abhängigen Ansprüche enthalten vorteilhafte Ausgestaltungen der Erfindung.

Eine erfindungsgemäße Brennerspitze weist eine Brenneraustrittsöffnung und wenigstens ein die Brenneraustrittsöffnung umgebendes Brennerspitzenteil auf. Das Brennerspitzenteil besitzt eine Brennerspitzenwand mit einer ein geschlossenes Ende des Brennerspitzenteils bildenden Stirnwand. In seinem Inneren weist das Brennerspitzenteil einen bis zur Stirnwand reichenden Hohlraum auf. Die Brennerspitzenwand weist eine zum Hohlraum weisende Wandinnenseite auf. In dem Hohlraum ist ein Verdrängungskörper mit einer der Wandinnenseite der Brennerspitzenwand zugewandten Verdrängungskörper-Außenseite angeordnet, wobei der Verdrängerkörper hohl ausgebildet ist. Zwischen der Wandinnenseite der Brennerspitzenwand und der Verdrängungskörper-Außenseite ist wenigstens ein Strömungskanal gebildet.

Durch das hohle Ausbilden des Verdrängungskörpers lässt sich im Vergleich zu Verbrennerspitzen nach Stand der Technik, in denen der Verdrängungskörper als Vollkörper ausgebildet ist, Gewicht und Material einsparen. Wegen des geringeren Gewichtes ist die Brennerspitze, die Durchmesser von 50 cm und mehr aufweisen kann, leichter zu handhaben, etwa im Rahmen eines Wartungs- oder Reparaturprozesses.

In einer Weiterbildung der erfindungsgemäßen Brennerspitze weist der Verdrängungskörper ein zur Stirnwand proximales Ende, ein zur Stirnwand distales Ende, einen Verdrängungskörper-Innenraum und im Bereich des distalen Endes wenigstens eine zum Verdrängungskörper-Innenraum hin offene Verdrängungskörper-Öffnung auf. Auf diese Weise wird es möglich, den hohlen Verdrängungskörper einem durch den Strömungskanal zwischen der Verdrängungskörper-Außenseite und der Wandinnenseite der Brennerspitzenwand strömenden Kühlfluid, bspw. Kühlwasser, zugänglich zu machen. Hierzu kann bspw. ein Strömungsleitelement derart in der Verdrängungskörper-Öffnung angeordnet sein, dass es die Verdrängungskörper-Öffnung in einen Einströmabschnitt und einem Ausströmabschnitt unterteilt und dass zwischen dem Einströmabschnitt und dem Ausströmabschnitt ein Strömungspfad um das Strömungsleitelement herum gebildet wird. Alternativ besteht die Möglichkeit, dass der Verdrängungskörper wenigstens eine weitere zum Verdrängungskörper-Innenraum hin offene Verdrängungskörper-Öffnung aufweist. Diese ist dann zwischen dem proximalen Ende des Verdrängungskörpers und der im Bereich des distalen Endes angeordneten Verdrängungskörper-Öffnung angeordnet. Zwischen der Verdrängungskörper-Öffnung und der weiteren Verdrängungskörper-Öffnung bildet der Verdrängungskörper-Innenraum einen Strömungspfad für Kühlfluid wie etwa Kühlwasser.

Wenn im Inneren des Verdrängungskörpers ein Strömungspfad für Kühlfluid gebildet ist, kann sich im Verdrängungskörper-Innenraum ein vom Strömungspfad abzweigender Sammelraum für Fremdkörper in dem durch den Strömungspfad strömenden Fluid befinden. Hierbei ist es vorteilhaft, wenn sich der Sammelraum im Verdrängungskörper-Innenraum in einem Bereich des Strömungspfades befindet, in dem eine Änderung der Strömungsrichtung stattfindet. Besonders vorteilhaft ist es, wenn die Änderung der Strömungsrichtung eine weitgehende Strömungsumkehr mit sich bringt. Im hohlen Verdrängungskörper ist dabei genug Platz, um einen hinreichend großen Sammelraum zur Verfügung stellen zu können. Das Sammeln von Fremdkörpern wie etwa Schwebeteilchen im Kühlfluid führt dazu, dass sich die um die Außenseite des Verdrängungskörpers herum führenden Fluidkanäle langsamer zusetzen und dadurch eine Verengung des Strömungsquerschnittes länger hinaus gezögert werden kann. Dies wirkt sich wiederum günstig auf die Wartungsintervalle aus.

In einer speziellen Ausgestaltung der erfindungsgemäßen Brennerspitze ist der Verdrängungskörper über Stützstrukturen, beispielsweise über stegartige oder pfeilerartige Strukturen, mit der Wandinnenseite der Brennerspitzenwand verbunden. Die Stützstrukturen erstrecken sich dabei von der Verdrängungskörper-Außenseite zur Wandinnenseite der Brennerspitzenwand. Wenn die Stützstrukturen als stegartige oder pfeilerartige Strukturen ausgestaltet sind, können zumindest im Bereich der Brennerspitzenstirnwand benachbarte stegartige oder pfeilerartige Strukturen an der Verdrängungskörper-Außenseite und/oder an der Wandinnenseite der Brennerspitzenwand zu Bögen zusammenlaufen. Diese Bögen können insbesondere als Spitzbögen, ähnlich den Bögen in der gotischen Architektur, ausgebildet sein. Durch die Stutzstrukturen kann die Lage des Verdrängungskörpers im Inneren der Brennerspitzenwand festgelegt werden. Außerdem kann die gesamte Struktur aus Brennerspitzenwand und Verdrängungskörper insgesamt stabiler ausgestaltet werden.

In einer weiteren Ausgestaltung der Brennerspitze mit Stützstrukturen ist die Dichte an Stützstrukturen, welche den Verdrängungskörper mit der Brennerspitzenwand verbinden, zumindest im Bereich der Stirnwand im Vergleich zu anderen Bereichen der Brennerspitzenwand erhöht. Dort, wo die Dichte der Stützstrukturen erhöht ist, kann dann die Brennerspitzenwand im Vergleich zu Bereichen ohne erhöhte Dichte an Stützstrukturen dünner ausgestaltet sein. Insbesondere kann sie Dicken unter 3 mm aufweisen, insbesondere Dicken im Bereich von 0,5 mm bis 2 mm. Auf diese Weise lässt sich in Bereichen, die besonders hohen Temperaturen und/oder besonders ausgeprägten Temperaturfluktuationen ausgesetzt sind, die von der Brennerspitzenwand aufgenommene Wärme rascher an das Kühlfluid abführen, wodurch die dünnere Wand kühler gehalten werden kann, als eine dickere Wand, was sich wiederum günstig auf die zur Verfügung stehende Betriebsdauer bis zu einer Wartung auswirkt.

Im Rahmen der erfindungsgemäßen Brennerspitze kann der Verdrängungskörper insbesondere einstückig mit den Stützstrukturen und der Brennerspitzenwand ausgebildet sein. Dies erlaubt eine besonders stabile Struktur und ermöglicht bei vielen Strukturen überhaupt die Herstellung erst. Die Herstellung kann dabei durch generative Schichtaufbauverfahren (engl.: additive manufacturing process) erfolgen, bspw. durch selektives Laserschmelzen (engl.: selective laser melting).

Die Brennerspitzenwand kann wenigstens in Bereich der Stirnwand mit einer Wärmedämmschicht beschichtet sein. Insbesondere, wenn die Brennerspitzenwand dickere und dünnere Bereiche aufweist ist eine Ausgestaltung vorteilhaft, in der die Wärmedämmschicht auf die dünneren Bereiche, insbesondere im Bereich der Stirnwand, aufgebracht ist. Dadurch, dass in dieser Ausgestaltung in den Bereichen mit Wärmedämmschicht die Brennerspitzenwand dünner ist, kann erreicht werden, dass die gesamte Wanddicke in diesen Bereichen trotz der aufgebrachten Wärmedämmschicht die Dicke der übrigen Bereiche ohne Wärmedämmschicht nicht überstreitet.

In der erfindungsgemäßen Brennerspitze können zudem Drallschaufeln, die wenigstens teilweise in die Brenneraustrittsöffnung hineinragen, mit der Brennerwand einstückig ausgebildet sein. Bisher werden Drallschaufeln von der der Brennerspitze abgewandten Brennseite aus in die von der Brennerwand umgebene Brenneraustrittsöffnung eingeschoben. Bei diesem Einschieben kann es zu Beschädigung der Drallschaufeln und/oder der Brennerspitzenwand kommen. Durch das einstückige Ausbilden der Drallschaufeln mit der Brennerspitzenwand wird das Einschieben von Drallschaufeln überflüssig. Zudem besteht die Möglichkeit, dass sich der zwischen der Wandinnenseite der Brennerspitzenwand und der Verdrängungskörper-Außenseite gebildete Strömungskanal wenigstens teilweise auch durch die Drallschaufeln erstreckt. Auf diese Weise wird eine gemeinsame Kühlung von Brennerspitze und Drallschaufeln möglich. Mit Hilfe spezieller Fertigungsverfahren (generative Schichtaufbauverfahren) kann erreicht werden, dass die Drallschaufeln eine Beschaufelung bilden, welche die Form einer Düse aufweist, die den Strömungsquerschnitt für ein durch die Beschaufelung strömendes Sauerstoff-Dampf-Gemisch in bestimmten Bereichen der Beschaufelung verkleinert.

In der erfindungsgemäßen Brennerspitze können die Brennerspitzenwand und der Verdrängungskörper toroidal ausgebildet sein.

Ein erfindungsgemäßer Brenner ist mit einer erfindungsgemäßen Brennerspitze versehen. Die damit verbundenen Eigenschaften und Vorteile ergeben sich aus denen der erfindungsgemäßen Brennerspitze.

Weitere Merkmale, Eigenschaften und Vorteile der vorliegenden Erfindung erheben sich aus der nachfolgenden Beschreibung von Ausführungsbeispielen unter Bezugnahme auf die beiliegenden Figuren.
Figur 1 zeigt eine Prinzipskizze eines Brenners, wie er in Synthesegasreaktoren Verwendung findet.
Figur 2 zeigt die Spitze eines ersten Brennerelements.
Figur 3 zeigt die Spitze eines zweiten Brennerelements.
Figur 4 zeigt die Spitze eines im Brenner verwendeten Pilotbrenners.
Figur 5 zeigt eine alternative Ausgestaltung der Spitze aus Figur 3.
Figur 6 zeigt eine weitere alternative Ausgestaltung der Spitze aus Figur 3.
Figur 7 zeigt noch eine weitere alternative Ausgestaltung aus Figur 3.
Figur 8 zeigt die Ausgestaltung aus Figur 7 in einem Schnitt entlang der Linie VIII-VIII.

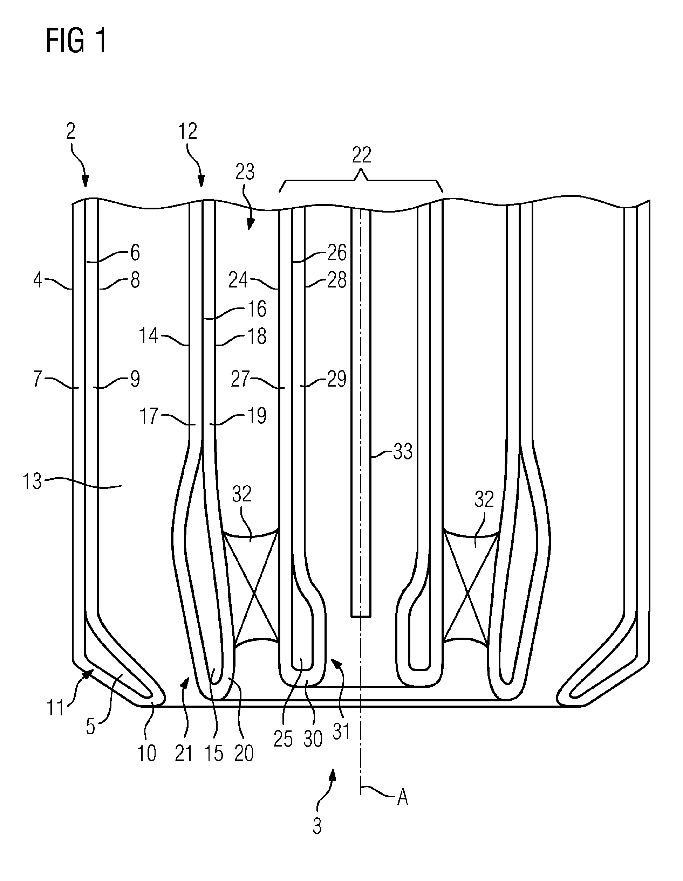

Der prinzipielle Aufbau eines Brenners für Synthesegasreaktoren wird nachfolgend mit Bezug auf Figur 1 beschrieben.

Der Brenner ist rotationssymmetrisch um eine Brennerachse A herum aufgebaut und umfasst einen rohrförmigen Zuleitungsabschnitt sowie eine sich an den Zuleitungsabschnitt anschließende Brennerspitze 1, die eine Brenneröffnung 3 umgibt.

Der Brenner umfasst ein erstes, äußeres Brennerelement 2, das im rohrförmigen Abschnitt des Brenners aus drei ineinandergeschobenen Rohren 4, 6, 8 gebildet ist. Zwischen den Rohren sind ein Kühlfluidzufuhrkanal 7 und eine Kühlfluidabfuhrkanal 9 gebildet, über die Kühlfluid in die Brennerspitze 1 zugeführt bzw. aus dieser abgeführt werden kann. Als Kühlfluid kommt insbesondere Wasser in Betracht. Im Bereich der Brennerspitze 1 weicht das äußere Brennerelement 2 von der reinen Rohrform ab und ist in Richtung auf das Zentrum der Brenneraustrittsöffnung 3 geneigt. Außerdem weist es im Bereich der Spitze einen Hohlraum auf, in dem ein Verdrängungskörper 5 mit Abstand zur Wand des Brennerelements 2 in diesem Bereich angeordnet ist. Zwischen der Innenseite der Wand 11A des Brennerelements 2 im Spitzenbereich und der Verdrängungskörperaußenseite ist dabei ein Strömungskanal 10 gebildet, durch den das Kühlfluid, beispielsweise Kühlwasser, durch die Spitze des äußeren Brennerelements 2 geleitet wird, um diese zu kühlen. Der von der Rohrform abweichende Teil des äußeren Brennerelements 2 stellt ein äußeres Brennerspitzenteil 11 dar, das als eigenständiges Teil ausgebildet und dessen Wand 11A an den rohrförmigen Abschnitt des äußeren Brennerelements 2 angeschweißt ist. Dabei weist die Wand 11A des Brennerspitzenteils 11 eine in etwa U-förmige Biegung auf, so dass sie sowohl mit dem äußeren Rohr 4 als auch mit den inneren Rohr 8 des rohrförmigen Abschnitts des äußeren Brennerelements 2 verbunden werden kann. Der Verdrängungskörper 5 ist auf das mittlere Rohr 6 aufgesteckt. Hierzu weist er eine Nut 5A auf, deren Breite an die Wanddicke des mittleren Rohres 6 des rohrförmigen Abschnitts angepasst ist.

Der Brenner umfasst weiterhin ein inneres Brennerelement 12, das außer im Bereich der Brennerspitze 1 ebenfalls aus drei ineinandergeschobenen Rohren 14, 16, 18 gebildet ist. Im Bereich der Brennerspitze 1 schließt sich an den rohrförmigen Abschnitt des inneren Brennerelements 12 ein inneres Brennerspitzenteil 15 mit einem darin befindlichen Hohlraum an. In diesem Hohlraum ist ein Verdrängungskörper 15 angeordnet, wobei die Verdrängungskörperaußenseite einen Abstand zur Innenseite der Brennerspitzenwand 21A im Bereich des inneren Brennerspitzenteils 21 aufweist, so dass ein Strömungskanal zwischen beiden gebildet ist. Die Zufuhr von Kühlfluid in den Strömungskanal erfolgt über einen zwischen den ineinandergeschobenen Rohren 14, 16 des rohrförmigen Abschnitts des inneren Brennerelements 12 gebildeten Zufuhrkanal 17, die Abfuhr des Kühlfluids aus dem Bereich des inneren Brennerspitzenteils 21 über einen zwischen den ineinandergeschobenen Rohren 16, 18 gebildeten Abfuhrkanal 19. Auch das innere Brennerspitzenteil ist als eigenständiges Teil ausgebildet, dessen Wand 21A an das äußere Rohr 14 und das innere Rohr 18 des rohrförmigen Abschnitts angeschweißt ist. Hierzu ist die Wand 21A im weitesten Sinne u-förmig gebogen, so dass sie sowohl mit dem äußeren Rohr 14 als auch mit dem inneren Rohr 18 der drei ineinander geschobenen Rohre 14, 16, 18 des rohrförmigen Abschnitts verschweißt werden kann. Der Verdrängungskörper 15 ist auf das mittlere Rohr 16 des rohrförmigen Abschnitts aufgesteckt. Hierzu weist er eine Nut 15A auf, deren Breite an die Wanddicke des mittleren Rohres 16 angepasst ist.

Das innere Brennerelement 12 weist einen Außendurchmesser auf, der kleiner ist als der Innendurchmesser des äußeren Brennerelements 2, so dass zwischen beiden ein Ringkanal gebildet ist, der zur Zufuhr eines Brennstaubes, beispielsweise zur Zufuhr von Kohlenstaub, dient.

Das innere Brennerelement 12 umschließt einen weitgehend zylinderförmigen Raum, in dem ein Pilotbrenner 21 angeordnet ist. Dieser umfasst einen rohrförmigen Abschnitt 22A, der aus drei Rohren 24, 26, 28 gebildet ist und an den sich im Bereich der Brennerspitze 1 ein Pilotbrennerspitzenteil 31 anschließt. Das Pilotbrennerspitzenteil 31 weist einen Hohlraum auf, in dem ein Verdrängungskörper 25 angeordnet ist, wobei die Verdrängungskörperaußenseite einen Abstand von der Innenseite der Wand 31A des Pilotbrennerspitzenteils 31 aufweist, so dass zwischen beiden ein Strömungskanal 30 gebildet ist. Wie beim äußeren Brennerelement 2 und beim inneren Brennerelement 12 ist die Wand 31A des Spitzenteils 31 an den rohrförmigen Abschnitt angeschweißt. Die Wand 31A des Pilotbrennerspitzenteils 31 ist dabei im weitesten Sinne u-förmig gebogen, so dass sie einerseits mit dem äußeren Rohr 24 des rohrförmigen Abschnitts des Pilotbrenners 21 als auch mit dem inneren Rohr 28 des rohrförmigen Abschnitts des Pilotbrenners 21 verschweißt werden kann. Der Verdrängungskörper 25 ist auf das mittlere Rohr 26 des rohrförmigen Abschnitts aufgesteckt. Hierzu weist er eine Nut 25A auf, deren Breite an die Wanddicke des mittleren Rohres 26 angepasst ist.

Der rohrförmige Abschnitt des Pilotbrenners 22 weist einen Außendurchmesser auf, der geringer ist als der Innendurchmesser des inneren Brennerelements 12, so dass zwischen beiden ein Sauerstoff/Dampf-Kanal 23 gebildet ist. Dieser dient zur Zufuhr von Wasserdampf, der im Synthesegasreaktor für die Umwandlung des Brennstaubs in Synthesegas benötigt wird, und gegebenenfalls zur Zufuhr von Sauerstoff oder Luft. Zur Förderung der Synthesegasreaktion wird der zugeführte Wasserdampf, und gegebenenfalls der zugeführte Sauerstoff bzw. die zugeführte Luft, verwirbelt, um die Synthesegasreaktion zu fördern. Hierzu sind Drallschaufeln 32 im Bereich der Brennerspitze 1 zwischen dem inneren Brennerelement 12 und dem Pilotbrenner 22 angeordnet.

Der Pilotbrenner 22 umschließt einen im Wesentlichen zylinderförmigen Hohlraum, in dem ein Zündbrenner und eine Vorrichtung zur Flammenüberwachung angeordnet sind. Diese beiden Elemente sind in der Figur lediglich stark schematisiert dargestellt und unter der Bezugsziffer 33 zusammengefasst.

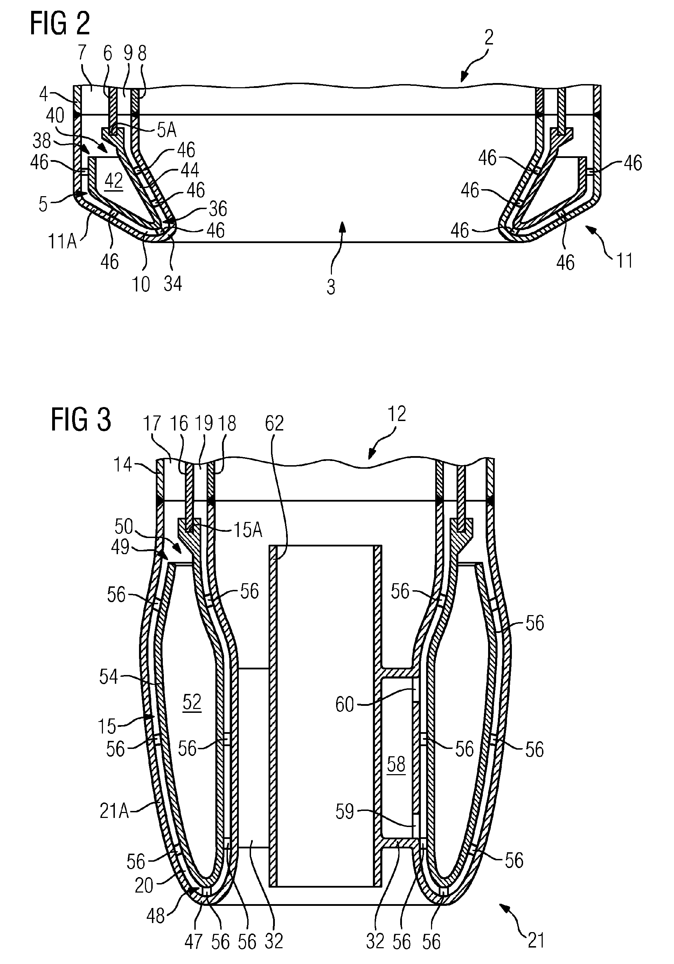

Figur 2 zeigt den Aufbau des äußeren Brennerspitzenteils 11. Außerdem sind die die ineinander geschobenen Rohre 4, 6, 8 des rohrförmigen Abschnittes des äußeren Brennerelementes 2 zu erkennen. Das äußere Brennerspitzenteil 11 endet in einer Stirnwand 34, die das Ende des äußeren Brennerspitzenteils darstellt. Im äußeren Brennerspitzenteil 11 ist ein Hohlraum gebildet, in dem sich, wie bereits beschrieben, der Verdrängungskörper 5 befindet. Dieser ist, wie in Figur 2 dargestellt ist, hohl ausgebildet. Er weist ein zur Stirnwand 34 proximalen Ende 36 sowie ein zur Stirnwand distales Ende 38 mit einer Nut 5A zum Aufstecken auf das mittlere Rohr 6 des rohrförmigen Abschnitts des Brennerelements auf. Im Bereich des distalen Endes 38, insbesondere unmittelbar vor der Nut 5A im distalen Ende, ist eine Verdrängungskörper-Öffnung 40 vorhanden, die zum Innenraum 42 des hohlen Verdrängungskörpers 5 hin offen ist, so dass der Innenraum 42 durch die Verdrängungskörper-Öffnung 40 zugänglich ist. Die in etwa u-förmig gebogene Brennerspitzenwand 11A ist sowohl mit dem äußeren Rohr 4 als auch mit dem inneren Rohr 8 des rohrförmigen Abschnitts des äußeren Brennerelements 2 verbunden, während der Verdrängungskörper 5 derart mit dem mittleren Rohr 6 des rohrförmigen Abschnitts des äußeren Brennerelements 2 verbunden ist, dass die Verdrängungskörper-Öffnung 40 zu dem zwischen dem äußeren Rohr 4 und dem mittleren Rohr 6 gebildeten Zufuhrkanal 7 hin offen ist. Der Verdrängungskörper-Innenraum 42 ist dadurch strömungstechnisch mit dem Zufuhrkanal 7 für das Kühlfluid verbunden.

Der hohle Verdrängungskörper 5, der im Wesentlichen aus einer relativ dünnen Verdrängungskörperwand 44 besteht, ist über Stützstrukturen 46 mit der Innenseite der Brennerspitzenwand 2 verbunden. Diese können stegartig oder pfeilerartig ausgebildet sein, so dass sie die Strömung im Strömungskanal 10 möglichst wenig behindern und gegebenenfalls sogar leiten.

Fig. 3 zeigt den Aufbau des inneren Brennerspitzenteils 21 sowie die sich darin anschließenden ineinandergeschobenen Rohre 14, 16, 18 des rohrförmigen Abschnitts des inneren Brennerelements 12. Das innere Brennerspitzenteil 21 weist eine Brennerspitzenwand 21A mit einer Stirnwand 47, die das geschlossene Ende des inneren Brennerspitzenteils 21 bildet, auf. Wie bereits mit Bezug auf Figur 1 beschrieben worden ist, befindet sich im Hohlraum des inneren Brennerspitzenteils 21 ein Verdrängungskörper 15. Dieser ist wiederum selbst hohl ausgebildet und weist eine einen Verdrängungskörper-Innenraum 52 umgebende Verdrängungsköper-Wand 54 auf. Darüber hinaus weist der Verdrängungskörper 15 ein zur Stirnwand 47 proximales Ende 48 und ein zur Stirnwand 47 distales Ende 49 mit einer Nut 15A zum Aufstecken auf das mittlere Rohr 16 des rohrförmigen Abschnitts des Brennerelements auf. Im Bereich des distalen Endes 49, insbesondere unmittelbar vor der Nut 15A im distalen Ende, ist eine Verdrängungskörper-Öffnung 50 angeordnet, über die der Verdrängungskörper-Innenraum 52 zugänglich ist. Die Brennerspitzenwand 21A des inneren Brennerspitzenteils 21 ist in etwa u-förmig gebogen, wobei die Enden der Brennerspitzenwand 21A mit dem äußeren Rohr 14 des rohrförmigen Abschnitts des inneren Brennerelements 12 sowie mit dessen innerem Rohr 18 verbunden ist. Die Verdrängungskörperwand 54 ist so mit dem mittleren Rohr 16 des rohrförmigen Abschnittes des inneren Brennerelements 12 verbunden, dass die Verdrängungskörperöffnung 50 zudem zwischen dem äußeren Rohr 14 und dem mittleren Rohr 16 des rohrförmigen Abschnittes des inneren Brennerelements 12 hin offen ist. Auf diese Weise ist der Verdrängungskörperinnenraum 52 strömungstechnisch mit dem Zufuhrkanal 17 für das Kühlfluid verbunden ist. Die Verdrängungskörper-Wand 54 ist über Stützstrukturen, die beispielsweise steg- oder pfeilerartig ausgebildet sein können, mit der Innenseite der Brennerspitzenwand 21A verbunden, so dass ein definierter Abstand zwischen der Verdrängungskörper-Außenseite und der Innenseite der Brennerspitzenwand 21A vorhanden ist, um den Strömungskanal 20 zu bilden. Wie beim äußeren Brennerspitzenteil können die Stützstrukturen auch derart ausgebildet sein, dass sie die Strömung durch den Strömungskanal leiten, auf jeden Fall sind sie jedoch so ausgebildet, dass sie die Strömung möglichst wenig behindern.

Mit dem Brennerspitzenteil 21 des inneren Brennerelements 12 sind Drallschaufeln 32 einstückig ausgebildet. Die Drallschaufeln 32 sind hohl, und besitzen jeweils einen Drallschaufel-Innenraum 58, der über eine Kühlfluideintrittsöffnung 59 und eine Kühlfluidaustrittsöffnung 60 strömungstechnisch mit dem um den Verdrängungskörper 15 herumführenden Strömungskanal 20 verbunden ist. Der Drallkörper-Innenraum 58 ist damit Teil des Kühlkreislaufs, so dass die Drallschaufeln 32 zusammen mit dem inneren Brennerspitzenteil 21 durch das Kühlfluid gekühlt werden.

Ebenfalls einstückig mit dem inneren Brennerspitzenteil 21 und den Drallschaufeln 32 ist im vorliegenden Ausführungsbeispiel ein Rohr 62 ausgebildet, das als Führung für das Einsetzen des Pilotbrenners 22 dient. Ausführungsbeispiele ohne Rohr 62 zur Führung des Pilotbrenners 22 sind aber auch möglich. Das in der Figur dargestellte Rohr 62 stellt somit lediglich eine Option dar.

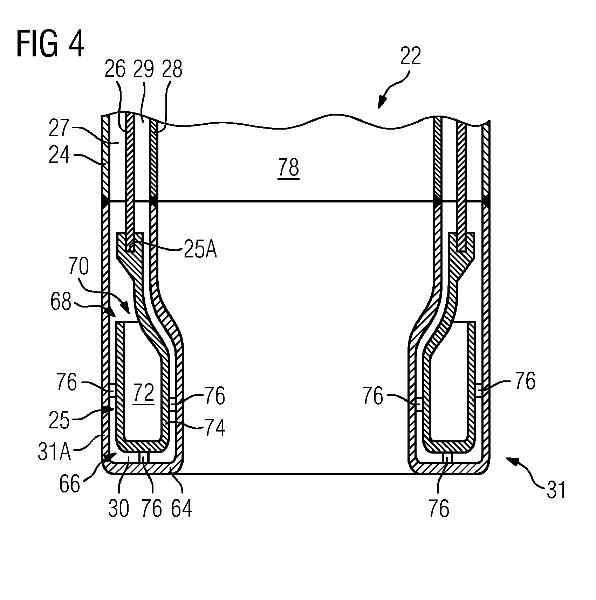

Die Struktur des Pilotbrenners 22 im Bereich der Brennerspitze 1 ist in Figur 4 dargestellt. In der Figur sind das Pilotbrennerspitzenteil 31 sowie der aus den drei ineinandergeschobenen Rohren 24, 26, 28 gebildete rohrförmige Abschnitt des Pilotbrenners 22 zu erkennen.

Das Pilotbrennerspitzenteil 31 weist eine in etwa u-förmig gebogene Brennerspitzenwand 31A auf, die einen Innenraum des Pilotbrennerspitzenteils 31 umgibt. In dem Innenraum ist ein Verdrängungskörper 25 angeordnet. Wie bei Brennerspitzenteilen 11, 21 des äußeren Brennerelements 2 und des inneren Brennerelements 12 ist auch der im Innenraum des Pilotbrennerspitzenteils 21 befindliche Verdrängungskörper 25 hohl ausgebildet. Er weist ein zur Stirnseite 76 weisendes proximales Ende 66 und ein von diesem abgewandtes distales Ende 68 mit einer Nut 25A zum Aufstecken auf das mittlere Rohr 26 des rohrförmigen Abschnitts des Brennerelements auf. Im Bereich des distalen Endes 68, insbesondere unmittelbar vor der Nut 25A im distalen Ende, ist eine Verdrängungskörper-Öffnung 70 angeordnet, über die der Innenraum 72 des Verdrängungskörpers 25 zugänglich ist. Der Verdrängungskörper-Innenraum 72 ist von einer Verdrängungskörper-Wand 74 umgeben, die über Stützstrukturen 76, beispielsweise die bereits beschriebenen pfeilerartigen oder stegartigen Strukturen, mit der Innenseite der Brennerspitzenwand 31A verbunden ist. Auch bei der Brennerspitzenwand des Pilotbrenners können die Stützstrukturen 76 strömungsleitend ausgebildet sein. Auf jeden Fall sind sie jedoch so ausgebildet, dass sie die Strömung durch den zwischen der Verdrängungskörper-Außenseite und der Innenseite der Brennerspitzenwand 31A gebildeten Strömungskanal 30 nicht behindern.

Die beiden Enden der in etwa u-förmig gebogenen Brennerspitzenwand 31A der Pilotbrennerspitze 31 sind mit dem äußeren Rohr 24 und dem inneren Rohr 28 des rohrförmigen Abschnitts des Pilotbrenners 22 verbunden, die Verdrängungskörper-Wand 74 mit dem mittleren Rohr 26 des rohrförmigen Abschnitts. Die Verbindung ist dabei an einer Stelle der Verdrängungskörper-Wand 74 ausgeführt, die derart gewählt ist, dass die Verdrängungskörper-Öffnung 70 zu dem zwischen dem äußeren Rohr 24 des rohrförmigen Abschnitts des Pilotbrenners 22 und dessen mittlerem Rohr 26 gebildeten Zufuhrkanal hin offen ist. Der Verdrängungskörper-Innenraum 72 ist dadurch in den Kühlfluidkreislauf integriert.

Der Außendurchmesser des Pilotbrenners 22 ist so gewählt, dass er in das Rohr 62 der inneren Brennerwand 12 eingeschoben werden kann. Der Pilotbrenner 22 umschließt zudem einen weitgehend zylinderförmigen Innenraum, in dem ein Zündbrenner und eine Flammenüberwachungsvorrichtung angeordnet werden können.

Sowohl bei dem äußeren Brennerelement 2 und dem inneren Brennerelement 12 als auch beim Pilotbrenner 22 werden die Brennerspitzenteile 11, 21, 31 jeweils getrennt von den durch die ineinandergeschobenen Rohre gebildeten rohrförmigen Abschnitte hergestellt. Anschließend werden dann die ineinandergeschobenen Rohre beispielsweise mittels eines Schweißprozesses mit den jeweiligen Brennerspitzenteilen verbunden.

Die Brennerspitzenteile können insbesondere jeweils einstückig mittels eines generativen Schichtaufbauverfahrens hergestellt werden. Dadurch werden die beschriebenen komplexen Strukturen, in denen hohle Verdrängungskörper über Stützstrukturen mit den Brennerspitzenwänden verbunden sind, möglich. Insbesondere auch das einstückige Herstellen der Drallschaufeln 32 und des Rohres 62 mit dem inneren Brennerspitzenteil 21 kann durch das generative Herstellen mittels eines Schichtaufbauverfahrens 5 gewährleistet werden. Als ein generatives Schichtaufbauverfahren kann insbesondere selektives Lasersintern zur Anwendung kommen.

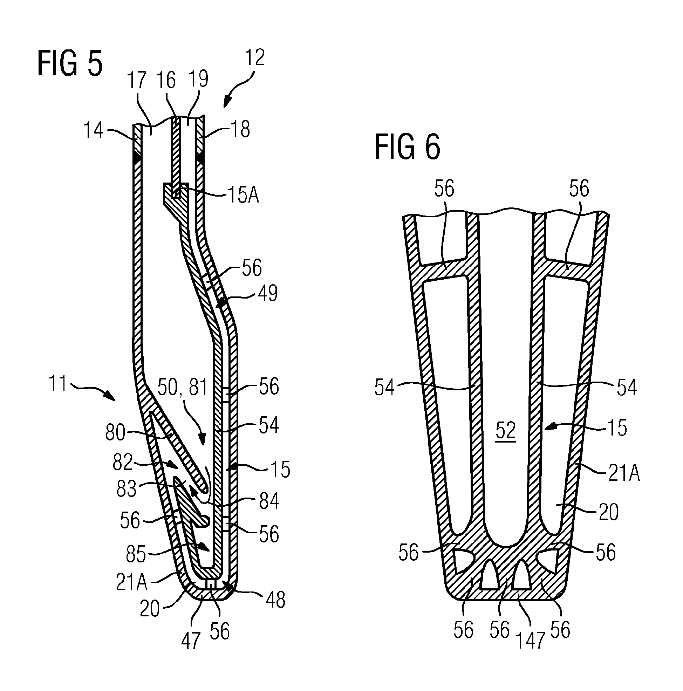

Eine Abwandlung des in Figur 3 dargestellten Ausführungsbeispiels wird nachfolgend mit Bezug auf Figur 5 beschrieben. Die Abwandlung konzentriert sich im Wesentlichen auf die Ausgestaltung des Verdrängungskörpers und seines Verdrängungskörper-Innenraums. Die übrigen Elemente des in Figur 3 beschriebenen Ausführungsbeispiels, etwa die Drallschaufeln, sind daher in Figur 5 nicht dargestellt. Elemente, die denen aus Figur 3 entsprechen sind mit denselben Bezugsziffern wie in Figur 3 bezeichnet und werden nicht noch einmal erläutert, um Wiederholungen zu vermeiden

Der Verdrängungskörper des in Figur 5 gezeigten Ausführungsbeispiels unterscheidet sich vom Verdrängungskörper des in Figur 3 dargestellten Ausführungsbeispiels im Wesentlichen dadurch, dass seine Verdrängungskörper-Öffnung 50 vergrößert ist. Darüber hinaus ragt ein Strömungsleitelement 80 von der Innenseite der inneren Brennerwand in die Verdrängungskörper-Öffnung 50 hinein, so dass das Strömungsleitelement 80 die Öffnung in einen Einströmabschnitt 81 und einen Ausströmabschnitt 82 unterteilt.

Um das Strömungsleitelement 80 herum ist ein Strömungspfad 83 gebildet. Am Ende des Strömungsleitelements 80 erfährt die Strömung durch den Strömungspfad 83 eine Strömungsumkehr 84. Im Bereich der Strömungsumkehr 84 zweigt ein Sammelraum 85 vom Strömungspfad 83 ab, wobei der Zugang zum Sammelraum in etwa in der ursprünglichen Strömungsrichtung, also der Strömungsrichtung vor der Strömungsumkehr, angeordnet ist. Im Kühlfluid befindliche Schwebeteilchen können den abrupten Richtungswechsel bei der Strömungsumkehr aufgrund ihrer Trägheit nicht so leicht nachvollziehen wie das Fluid selbst, so dass die Schwebeteilchen in den Sammelraum 85 gelangen und sich dort ablagern können. Auf diese Weise kann ein Teil der Schwebeteilchen aus dem Kühlfluid entfernt werden, bevor der zwischen der Verdrängungskörper-Außenseite und der Innenseite der Brennerspitzenwand 21A gebildete Strömungskanal 20 durchströmt wird, wodurch Ablagerungen von Schwebeteilchen in diesem Strömungskanal reduziert werden können, so dass eine Verengung des Strömungskanals vermieden oder zumindest hinausgezögert werden kann.

Obwohl das Ausführungsbeispiel mit dem Sammelraum 85 mit Bezug auf das Brennerspitzenteil 21 des inneren Brennerelements 12 beschrieben worden ist, kann eine entsprechende Ausgestaltung auch beim Brennerspitzenteil 11 des äußeren Brennerelements 2 und auch beim Pilotbrennerspitzenteil 31 vorhanden sein.

Eine weitere Alternative zum Ausführungsbeispiel aus Figur 3 ist in Figur 6 dargestellt. Elemente, die denen aus Figur 3 entsprechen, sind dabei mit denselben Bezugsziffern wie in Figur 3 bezeichnet und werden nicht noch einmal erläutert, um Wiederholungen zu vermeiden. Wie in Figur 5 sind in Figur 6 die Drallschaufeln 32 sowie das zylinderförmige Rohr 62 nicht dargestellt, da sich diese nicht von dem in Figur 3 dargestellten Ausführungsbeispiel unterscheiden.

Der wesentliche Unterschied zu dem in Figur 3 dargestellten Ausführungsbeispiel liegt darin, dass die Stirnwand 147 dünner ausgebildet ist, als bei dem in Figur 3 dargestellten Ausführungsbeispiel. Um die dünne Stirnwand 147 zu stabilisieren, ist in ihrem Bereich die Dichte an Stützstrukturen 146 erhöht. Die Stützstrukturen 146 sind als pfeilerartige Strukturen ausgebildet, die am Verdrängungskörper 15 in Bögen zusammenlaufen. Im vorliegenden Ausführungsbeispiel sind die Bögen als Spitzbögen ausgebildet, so dass die pfeilerartigen Stützstrukturen eine Art Gewölbe bilden, welches die Form eines gotischen Gewölbes aufweist.

Obwohl in dem in Figur 6 dargestellten Ausführungsbeispiel nur die Stirnwand 147 dünner ausgebildet ist, kann sich die dünne Wand auch über die Stirnwand 147 hinaus erstrecken und sogar die gesamte Brennerspitzenwand 21A bilden. Durch das Verringern der Dicke der Brennerspitzenwand 21A in thermisch hoch belasteten Bereichen kann eine raschere Wärmeabfuhr an das Kühlfluid erzielt werden. Außerdem ist eine dünnere Wand weniger anfällig gegenüber Wärmefluktuationen.

Die beschriebene spitzbogenartige Ausgestaltung der Stützstrukturen kann mittels des bereits erwähnten generativen Schichtaufbauverfahrens realisiert werden. Die mit Bezug auf Figur 6 beschriebene Ausgestaltung der Stützstrukturen und der Wanddicke kann auch bei den Brennerspitzenteilen 11, 31 des äußeren Brennerelements 2 und des Pilotbrenners 22 realisiert werden.

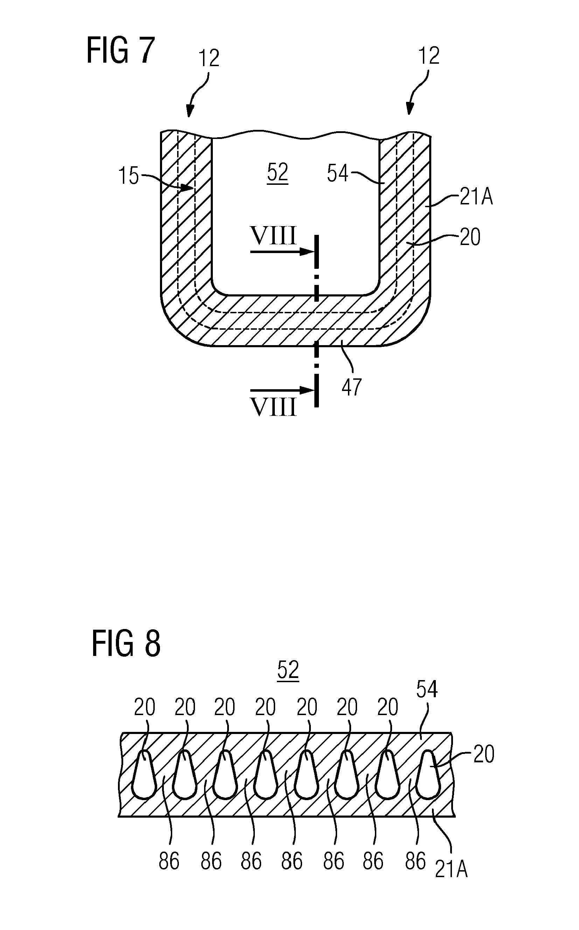

Eine alternative Form der Stützstrukturen, die ebenfalls eine Reduzierung der Wanddicke der Brennerspitzenwand ermöglicht, ist in den Figuren 7 und 8 dargestellt. Dabei zeigt Figur 8 einen Schnitt entlang der in Figur 7 gezeigten Linie VIII-VIII.

Die in den Figuren 7 und 8 dargestellten Stützstrukturen haben die Form von Stegen 86, die zwischen der Verdrängungskörper-Wand 54 und der Brennerspitzenwand 21A gebildet sind und sich vom distalen Ende des Verdrängungskörpers 15 um dessen proximales Ende herum und zurück zum distalen Ende erstrecken. Dabei verlaufen die Stege 86 parallel und laufen sowohl an der Verdrängungskörper-Außenseite als auch an der Innenseite der Brennerwand in Bögen zusammen. Im vorliegenden Ausführungsbeispiel sind die Bögen Spitzbögen, so dass zwischen den einen einzelnen Stegen Strömungskanäle 20 mit Querschnitten, die einer an ihren Enden spitz zulaufenden Ellipse entsprechen, gebildet sind. Auch diese Ausgestaltung der Stützstrukturen erlaubt ein Verringern der Wanddicke bei hoher Stabilität der dünneren Wand. Die mit Bezug auf die Figuren 7 und 8 beschriebenen Stützstrukturen können bei dem Brennerspitzenteil 11 des äußeren Brennerelements 2 und/oder dem Brennerspitzenteil 21 des inneren Brennerelements 12 und/oder dem Pilotbrennerspitzenteil 31 zum Einsatz kommen. Obwohl mit Bezug auf die Figuren 7 und 8 Spitzbögen beschrieben wurden, können auch andere Bogenformen, zur Anwendung kommen, wobei die jeweilige Bogenform u.a. im Hinblick auf das gewählte Herstellungsverfahren ausgesucht sein kann.

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

## Patentansprüche

1. Brennerspitze (1) mit einer Brenneraustrittsöffnung (3) und wenigstens einem die Brenneraustrittsöffnung (3) umgebenden Brennerspitzenteil (11, 21, 31), welches eine Brennerspitzenwand (11A, 21A, 31A) mit einer ein geschlossenes Ende des Brennerspitzenteils (11, 21, 31) bildenden Stirnwand (47, 67, 147) aufweist, wobei
- das Brennerspitzenteil (11, 21, 31) in seinem Inneren einen bis zur Stirnwand (34, 47, 64, 147) reichenden Hohlraum und die Brennerspitzenwand (11A, 21A, 31A) eine zum Hohlraum weisende Wandinnenseite aufweisen,
- in dem Hohlraum ein Verdrängungskörper (5, 15, 25) mit einer der Wandinnenseite der Brennerspitzenwand (11A, 21A, 31A) zugewandten Verdrängungskörper-Außenseite angeordnet ist,
- zwischen der Wandinnenseite der Brennerspitzenwand (11A, 21A, 31A) und der Verdrängungskörper-Außenseite wenigstens ein Strömungskanal (10, 20, 30) gebildet ist, und
- der Verdrängungskörper (5, 15, 25) hohl ausgebildet ist.

2. Brennerspitze (1) nach Anspruch 1, in der der Verdrängungskörper (5, 15, 25) ein zur Stirnwand (34, 47, 64) proximales Ende (36, 48, 66), ein zur Stirnwand (34, 47, 64) distales Ende (38, 49, 68), einen Verdrängungskörper-Innenraum (42, 52, 72) und im Bereich des distalen Endes (38, 49, 68) wenigstens eine zum Verdrängungskörper-Innenraum (42, 52, 72) hin offene Verdrängungskörper-Öffnung (40, 50, 70) aufweist.

3. Brennerspitze (1) nach Anspruch 2, in der in die Verdrängungskörper-Öffnung (50) wenigstens ein Strömungsleitelement (80) derart angeordnet, dass es die Verdrängungskörper-Öffnung (50) in einen Einströmabschnitt (81) und einen Ausströmabschnitt (82) unterteilt und dass um das Strömungsleitelement (80) herum ein Strömungspfad zwischen dem Einströmabschnitt (81) und dem Ausströmabschnitt (82) gebildet ist.

4. Brennerspitze (1) nach Anspruch 2, in der der Verdrängungskörper (5, 15, 25) wenigstens eine weitere zum Verdrängungskörper-Innenraum (42, 52, 72) hin offene Verdrängungskörper-Öffnung aufweist, die zwischen dem proximalen Ende (36, 48, 66) des Verdrängungskörpers (5, 15, 25) und der im Bereich des distalen Endes (38, 49, 68) angeordneten Verdrängungskörper-Öffnung (40, 50, 70) angeordnet ist und der Verdrängungskörper-Innenraum (42, 52, 72) einen Strömungspfad zwischen der Verdrängungskörper-Öffnung (40, 50, 70) und der weiteren Verdrängungskörper-Öffnung bildet.

5. Brennerspitze (1) nach Anspruch 3 oder Anspruch 4, in dem sich im Verdrängungskörper-Innenraum (50) ein vom Strömungspfad abzweigender Sammelraum (85) für Fremdkörper in einem durch den Strömungspfad (20) strömenden Fluid befindet.

6. Brennerspitze (1) nach Anspruch 5, in der sich ein Eingang zum Sammelraum (85) in einem Bereich des Strömungspfades befindet, in dem eine Änderung der Strömungsrichtung (84) stattfindet.

7. Brennerspitze (1) nach einem der vorangehenden Ansprüche, in der der Verdrängungskörper (5, 15, 25) über Stützstrukturen (46, 56, 76, 86), die sich von der Verdrängungskörper-Außenseite zur Wandinnenseite der Brennerspitzenwand (11A, 21A, 31A) erstrecken, mit der Wandinnenseite der Brennerspitzenwand (11A, 21A, 31A) verbunden ist.

8. Brennerspitze (1) nach Anspruch 7, in der die Stützstrukturen (46, 56, 76, 86) als stegartige oder pfeilerartige Strukturen ausgestaltet sind und zumindest im Bereich der Stirnwand (34, 47, 64) benachbarte stegartige oder pfeilerartige Strukturen an der Verdrängungskörper-Außenseite und/oder an der Wandinnenseite der Brennerspitzenwand (11A, 21A, 31A) zu Bögen zusammenlaufen.

9. Brennerspitze (1) nach Anspruch 8, in der die Bögen als Spitzbögen ausgebildet sind.

10. Brennerspitze (1) nach einem der Ansprüche 7 bis 9, in der die Dichte an Stützstrukturen (46, 56, 76), welche den Verdrängungskörper (5, 15, 25) mit der Brennerspitzenwand (11A, 21A, 31A) verbinden, zumindest im Bereich der Stirnwand (34, 47, 64) im Vergleich zu anderen Bereichen der Brennerspitzenwand (11A, 21A, 31A) erhöht ist.

11. Brennerspitze (1) nach Anspruch 10, in der die Brennerspitzenwand (21A) dort, wo die Dichte der Stützstrukturen (56) erhöht ist, im Vergleich zu Bereichen ohne erhöhte Dichte an Stützstrukturen (56) dünner ausgestaltet ist.

12. Brennerspitze (1) nach einem der Ansprüche 7 bis 11, in der der Verdrängungskörper (5, 15, 25) einstückig mit den Stützstrukturen (46, 56, 76, 86) und der Brennerspitzenwand (11A, 21A, 31A) ausgebildet ist.

13. Brennerspitze (1) nach einem der vorangehenden Ansprüche, in der die Brennerspitzenwand (11A, 21A, 31A) wenigstens in Bereich der Stirnwand an ihrer Außenseite mit einer Wärmedämmschicht beschichtet ist.

14. Brennerspitze (1) nach einem der vorangehenden Ansprüche, in der Drallschaufeln (32), die wenigstens teilweise in die Brenneraustrittsöffnung (3) hineinragen, mit der Brennerspitzenwand (21A) einstückig ausgebildet sind.

15. Brennerspitze (1) nach Anspruch 14, in der sich der zwischen der Wandinnenseite der Brennerspitzenwand (21A) und der Verdrängungskörper-Außenseite gebildete Strömungskanal (20) wenigstens teilweise durch die Drallschaufeln (32) erstreckt.

16. Brennerspitze nach einem der Ansprüche 14 oder 15, in welcher die Drallschaufeln (32) eine Beschaufelung bilden, welche die Form einer Düse aufweist, die den Strömungsquerschnitt für ein durch die Beschaufelung strömendes Sauerstoff-Dampf-Gemisch in bestimmten Bereichen der Beschaufelung verkleinert.

17. Brennerspitze (1) nach einem der vorangehenden Ansprüche, in der das Brennerspitzenteil (11, 21, 31) und der Verdrängungskörper (5, 15, 25) toroidal ausgebildet sind.

18. Brenner mit einer Brennerspitze nach einem der vorangehenden Ansprüche.
